# EUROPEAN PATENT SPECIFICATION

(11) **EP 2 877 351 B1**
(45) Date of publication and mention of the grant of the patent: **05.09.2018**
(21) Application number: 13756691.5
(22) Date of filing: 16.07.2013
(51) Int. Cl.: B60C 11/03

(54) **TYRE FOR SCOOTER AND/OR MAXISCOOTER**
REIFEN FÜR MOTORROLLER UND/ODER MAXIROLLER
PNEU DESTINÉ À UN SCOOTER ET/OU À UN MAXISCOOTER

(30) Priority: 25.07.2012 IT MI20121295; 25.10.2012 US 201261718455 P
(43) Date of publication of application: 03.06.2015
(73) Proprietor: Pirelli Tyre S.p.A., 20126 Milano (IT)
(72) Inventor: MARIANI, Mario, I-20126 Milano (IT); MONTANARI, Silvio, I-20126 Milano (IT); MISANI, Pierangelo, I-20126 Milano (IT)
(74) Representative: Porta, Checcacci & Associati S.p.A
(86) International application number: PCT/IB2013/055840
(87) International publication number: WO 2014/016733

(56) References cited:
- EP-A2- 0 145 009
- WO-A1-2009/153822
- JP-A- S6 136 002
- JP-A- H10 244 811
- JP-U- S6 115 607

## Description

The present invention relates to tyres for motorcycles. In particular, the present invention preferably relates to tyres adapted to be fitted on scooters and/or maxi scooters.

Documents EP 1918131, US 4289182 and JP 61-157405 describe tread patterns of tyres for motorcycles.

JP S61 36002 discloses a tread pattern of tyres for motorcycles comprising circumferential grooves parallel to the equatorial plane of the tyre and transversal grooves passing for the equatorial plane of the tyre and having the same length. Motorcycles like scooters are considered an excellent alternative to using a car and/or public transport along urban and/or regional routes of moderate distance due to their driving easiness and ability to move with greater agility in the traffic of the cities. Recently, a spread of the so-called maxi scooters has been noted, i.e. scooter motorcycles of greater size and weight, also suitable for long journeys. Such motorcycles are sometimes equipped with more than two wheels, whilst still maintaining one of the special features of motorcycles, i.e. their ability to corner by exploiting the camber angle of the tyres.

In line with a greater attention paid to aspects linked to sustainability, ecology and environment, in addition to scooter or maxi scooter motorcycles with engines operating with conventional fuels (typically petrol), motorcycle manufacturers are devising and releasing onto the market scooter or maxi scooter motorcycles comprising an electric engine, in order to reduce or eliminate the harmful emissions from exhaust gas.

In accordance with the aforementioned increased attention to aspects linked to sustainability, ecology and environment, the Applicant has faced the problem of providing tyres for motorcycles, in particular tyres for scooter and/or maxi scooter motorcycles, having low rolling resistance. Tyres with low rolling resistance advantageously allow a saving in fuel consumption (in the case of a conventional combustion engine) and/or electricity consumption (in the case of an electric or hybrid engine), so as to increase the distance that can be travelled by the motorcycle after filling the tank and/or recharging the batteries.

The need to have a low rolling resistance does, however, clash with at least some other requirements and/or characteristics of tyres for motorcycles, like for example the driving easiness and stability when travelling at different speeds, the grip on the ground both in a straight line and when cornering on dry or wet ground, driving comfort, efficiency of the braking action, the ability to effectively drain water during travel in the wet both in a straight line and when cornering.

In particular, the need to have a low rolling resistance directly opposes the need to have an effective draining action and an excellent grip when travelling on a wet ground, since usually a low rolling resistance obliges an arrangement of a very limited number of grooves on the tread to limit the extent of its deformation, whereas an effective draining action and an excellent grip when travelling on a wet ground require the provision of a large number of grooves.

The Applicant has, however, found that by arranging on the tread band a plurality of substantially longitudinal grooves and a limited amount of transversal grooves between said substantially longitudinal grooves, it is possible to obtain low rolling resistance together with good performance on a wet ground.

In one aspect thereof, the invention relates to a tyre for motorcycles comprising a tread band on which a tread pattern is formed comprising a plurality of grooves. The grooves are preferably arranged so as to define on the tread band a void to rubber ratio lower than or equal to about 12%.

The tread pattern preferably comprises a pair of first substantially longitudinal grooves arranged on opposite sides with respect to the equatorial plane of the tyre. The first substantially longitudinal grooves preferably extend substantially along the entire circumferential extension of the tread band.

The tread pattern preferably comprises at least a pair of second substantially longitudinal grooves, arranged in an axially outer position with respect to the pair of first substantially longitudinal grooves. The second substantially longitudinal grooves preferably extend substantially along the entire circumferential extension of the tread band.

The tread pattern preferably comprises a plurality of first transversal grooves. Such first transversal grooves are preferably arranged on at least 50%, more preferably at least about 80%, of the lateral extension of tread band portions comprised between the first and the second substantially longitudinal grooves. Preferably, the first and/or the second substantially longitudinal grooves extend along a substantially rectilinear direction.

Preferably, the first transversal grooves are connected to the first or to the second substantially longitudinal grooves. More preferably, the first transversal grooves are connected both to the first and to the second substantially longitudinal grooves.

Preferably, the first transversal grooves extend along a substantially rectilinear direction.

Preferably, the first transversal grooves are arranged obliquely, so as to form a first angle with respect to a direction parallel to the equatorial plane of the tyre. Preferably, said first angle is comprised, in absolute value, between about 20° and about 70°.

The tread pattern comprises a plurality of second transversal grooves, arranged in the portions of tread band comprised between said first and said second substantially longitudinal grooves. Such second transversal grooves have a length shorter than that of the first transversal grooves.

Preferably, the second transversal grooves extend along a substantially rectilinear direction.

Preferably, the second transversal grooves are arranged obliquely, so as to form a second angle with respect to a direction parallel to the equatorial plane of the tyre.

Preferably, said second angle is comprised, in absolute value, between about 20° and about 70°.

Preferably, the second transversal grooves extend substantially parallel to the first transversal grooves.

At least some of the second transversal grooves can preferably be connected to the first or to the second substantially longitudinal grooves.

Preferably, said tread pattern comprises a plurality of third transversal grooves, arranged in an axially outer position with respect to the second substantially longitudinal grooves.

Preferably, the third transversal grooves extend along a substantially rectilinear direction.

Preferably, the third transversal grooves are arranged obliquely, so as to form a third angle with respect to a direction parallel to the equatorial plane of the tyre. Preferably, said third angle is comprised, in absolute value, between about 20° and about 70°.

Preferably, the third transversal grooves extend substantially parallel to the first transversal grooves.

At least some of the third transversal grooves can preferably be connected to the second substantially longitudinal grooves.

Preferably, the tyre adapted to be fitted on the rear wheel of the motorcycle has a curvature ratio lower than or equal to about 0.27, more preferably lower than or equal to about 0.25. Preferably, the tyre adapted to be fitted on the front wheel of the motorcycle has a curvature ratio lower than or equal to about 0.50, more preferably lower than or equal to about 0.45.

Preferably, the tyre comprises sidewalls having a height at least equal to about 50% of the whole height of a transversal section of said tyre.

By "tread pattern" we mean the representation of the points of the tread band (including grooves) on a plane perpendicular to the equatorial plane of the tyre and tangent to the maximum diameter of the tyre. In the representation:
- in the lateral direction the distance of each point of the tread band from the equatorial plane corresponds to the distance of such a point from the equatorial plane measured over the lateral extension of the band itself;
- in the circumferential direction the distance between any two points of the tread band corresponds to the distance between the projections of the two points on the circumference corresponding to the maximum diameter of the tyre, said projection being carried out through radial planes passing through the two points. The sizes of angles, and/or linear quantities (distances, widths, lengths, etc.), and/or surfaces are meant to refer to the tread pattern as defined above. Moreover, with reference to the angle of the grooves formed in the tread band with respect to the equatorial plane of the tyre, such an angle is meant for each point of the groove as referring to the angle (comprised, in absolute value, between 0° and 90°) formed by a rotation carried out starting from a direction parallel to the equatorial plane up to the direction tangent to the groove passing through such a point.

The following definitions also apply:
- By "tyre for motorcycles" we mean a tyre having a high curvature ratio (typically greater than 0.150-0.200), capable of reaching high camber angles (for example 20°-30° and/or up to 50°-60°) during cornering of the motorcycle.
- By "equatorial plane" of the tyre we mean a plane perpendicular to the rotation axis of the tyre and that divides the tyre into two symmetrically identical parts.
- By "circumferential" or "longitudinal" direction we mean a direction generically facing the direction of rotation of the tyre, or in any case having a little inclination with respect to the direction of rotation of the tyre (for example a direction inclined by less than about 10° with respect to a direction parallel to the equatorial plane of the tyre).
- By "void to rubber ratio" of a given portion of tread band of the tyre (possibly of the whole tread band) we mean the ratio between the whole surface of the grooves comprised in such a given portion of tread band of the tyre (possibly in the whole tread band) and the overall surface of the given portion of tread band (possibly of the whole tread band).
- By "lateral extension" of the tread band we mean the length of the arc that defines the radially outermost profile of the tread band in a transversal section of the tyre.
- By "curvature" or "curvature ratio" of the tyre we mean the ratio between the distance comprised between the radially highest point of the tread band and the maximum cord of the tyre, and the same maximum cord of the tyre, in a transversal section thereof.
- By "height" of the tyre we mean the distance between the fitting diameter and the radially highest point of the tread band (measured on a transversal section of the tyre).
- By "pitch" of the tyre we mean the set of grooves and solid parts arranged so as to form a portion of pattern that repeats on the tread band, substantially the same as itself along the circumferential extension of the tread band. Along the circumferential extension of the tread band, the pitches can have different circumferential lengths.

Further characteristics and advantages of the tyre of the present invention will become clearer from the following detailed description of preferred embodiments, made with reference to the attached drawings just as a nonlimiting example. In such drawings:
- figure 1 shows a cross section view of a tyre according to the invention;
- figure 2 shows a perspective view of an embodiment of a tyre according to the invention;
- figure 3 shows a portion of the extension in plan of a portion of the tread band of a tyre according to the embodiment of the invention shown in figure 2.

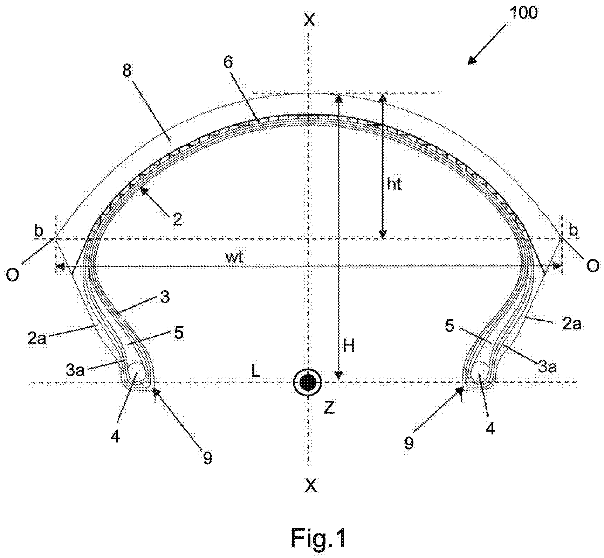

With reference to figure 1, reference numeral 100 wholly indicates a tyre for motorcycles according to the present invention. In particular, figure 1 shows a cross section of the tyre 100. Even more specifically, it concerns a tyre preferably adapted to be used on a rear wheel of a scooter or maxi scooter motorcycle. Preferably, the tyre 100 according to the invention has a fitting diameter at least equal to 14" (inches). Preferably, the tyre 100 according to the invention has a maximum fitting diameter of 17" (inches)

An equatorial plane X-X and a rotation axis Z-Z are defined in the tyre 100.

A circumferential or longitudinal direction and an axial or lateral direction perpendicular to the equatorial plane X-X are also defined.

The tyre 100 for motorcycles has a high curvature, when compared to the usual curvatures used in tyres to be used on cars or heavyload vehicles. The curvature of a tyre is defined by the particular value of the ratio between the distance ht of the radially outermost point of the tread band from the line b-b passing through the extremes O of the tread band, measured on the equatorial plane X-X, and the distance wt between said ends of the tread band. If the ends of the tread band cannot easily be identified, for example due to the lack of a precise reference like for example the edge indicated in figure 1 with O, it is certainly possible to take as distance wt the measurement of the maximum cord of the tyre.

The value of the aforementioned curvature ht/wt is also indicated here as "curvature ratio" of the tyre.

The tyre 100 of the present invention preferably has a curvature ratio ht/wt greater than or equal to about 0.15, more preferably greater than or equal to about 0.20. Preferably, in a tyre adapted to be fitted on a rear wheel of the motorcycle the curvature ratio ht/wt is lower than or equal to about 0.27, more preferably lower than or equal to about 0.25. Preferably, in a tyre adapted to be fitted on a front wheel of the motorcycle the curvature ratio ht/wt is lower than or equal to about 0.50, more preferably lower than or equal to about 0.45.

The Applicant has observed that a curvature profile that is not too extreme (in particular on the rear wheel) advantageously allows the characteristics of low rolling resistance to be improved, without jeopardising the characteristics of handling, comfort and grip both on a wet ground and on a dry ground.

The tyre 100 comprises a carcass structure 2 including at least one or two carcass plies 3. The carcass structure 2 is preferably coated on the inner walls thereof by a sealing layer, the so-called liner, i.e. a layer of elastomeric material impermeable to air, suitable for ensuring the hermetic seal of the tyre itself once inflated.

The carcass ply/plies 3 is/are preferably made of one or more layers of elastomeric material comprising a plurality of reinforcing elements (not shown) arranged parallel to one another. The reinforcing elements included in the carcass ply/plies 3 preferably comprise textile cords selected from those usually adopted in the manufacture of carcasses for tyres, for example nylon, rayon, lyocell, aramid, PET, PEN, with elementary thread having a diameter comprised between 0.35 and 1.5 mm. The reinforcing elements in the carcass ply/plies 3 are preferably arranged along a substantially radial direction, i.e. according to an angle comprised between 65° and 110°, more preferably between 80° and 100°, with respect to the equatorial plane X-X. In an alternative embodiment, not shown, the carcass structure comprises at least two radially overlapping carcass plies, wherein each of said plies comprises reinforcing elements substantially parallel to one another, oriented according to directions inclined with respect to the equatorial plane of the tyre and opposite with respect to the reinforcing elements of the radially adjacent ply (preferably according to an angle comprised between 20° and 55°).

The carcass ply/plies 3 is/are engaged, at the respective axially opposite lateral edges 3a, with respective annular reinforcing structures 4 adapted to hold the tyre on a corresponding assembly rim. The annular reinforcing structures 4 are typically called "bead wires".

On the outer perimeter edge of the bead wires 4 a tapered elastomeric filler 5 is applied. The filler 5 occupies the space defined between the carcass ply/plies 3 and the respective turned lateral edge 3a of the carcass ply/plies 3.

In an alternative embodiment thereof, not shown, the carcass structure has its opposite lateral edges associated without turning with annular reinforcing structures provided with metallic annular inserts. The end of the carcass structure can be arranged in an axially outer position with respect to a first annular insert.

A filler of elastomeric material can also be arranged in an axially outer position with respect to the first annular insert. A second annular insert can be arranged in an axially outer position with respect to the end of the carcass structure.

Finally, in an axially outer position with respect to said second annular insert, not necessarily in contact therewith, a further filler that ends the manufacture of the annular reinforcing structure can be provided.

The area of the tyre comprising the bead wire 4 and the filler 5 forms the so-called "bead", globally indicated in figure 1 with reference numeral 9, adapted to allow anchoring of the tyre on a corresponding assembly rim, not illustrated.

A belt structure 6 is provided in a radially outer position with respect to the aforementioned carcass structure.

A tread band 8 is provided in a radially outer position with respect to the belt structure 6. By the tread band 8 the contact of the tyre 100 with the ground takes place.

The tyre 100 further comprises a pair of sidewalls 2a applied laterally to the carcass structure 2 on axially opposite sides of the equatorial plane X-X. The sidewalls extend from the tread band 8 to the bead 9 of the tyre 100.

Preferably, the tyre 100 of the present invention has a ratio between the height of the sidewall (H-ht) and the height H, measured on the equatorial plane X-X, between the highest point of the tread band and the fitting diameter (which on the tyre 100 can be identified by a reference line L placed roughly at the base of the bead wires 4 of the tyre itself), greater than 0.5. Preferably, such a ratio does not exceed about 0.8. The Applicant has observed that the provision of a sidewall that is not particularly lowered may be advantageous for the purposes of improving the characteristics of low rolling resistance, as well as driving comfort. The belt structure 6 preferably comprises one or more rubberized cords (not shown), arranged substantially parallel to one another and side-by-side in the axial direction on the crown portion of the carcass structure 2, to form a plurality of coils. Such coils are substantially oriented according to the circumferential direction of the tyre (typically with an angle of between 0° and 10° with respect to the equatorial plane X-X of the tyre), such a direction usually being called "zero degrees" with reference to how it lies with respect to the equatorial plane X-X of the tyre. The aforementioned coils preferably extend over the whole crown portion of the carcass structure 2.

In some preferred embodiments, the belt structure 6 is formed from a single cord, or from a band of rubberized fabric comprising a certain number (preferably up to five) of cords arranged side-by-side. The cord or the band is wound in a spiral from one extremity to the other on the crown portion of the carcass structure 2.

Alternatively or in combination, the belt structure 6 can comprise at least two radially overlapping layers, each consisting of elastomeric material reinforced with cords arranged parallel to one another. The layers are arranged so that the cords of the first belt layer are oriented obliquely (for example according to an angle comprised between 15° and 40°) with respect to the equatorial plane X-X of the tyre, whereas the cords of the second layer also have an oblique orientation, but substantially symmetrically crossed with respect to the cords of the first layer, to form the so-called "crossed belt".

The cords of the belt structure 6 can be textile or metallic cords.

Preferably, for use in a zero degree belt, such cords are made through steel wires with high carbon content, that is steel wires with a carbon content at least equal to 0.6%. Preferably, such cords are steel metal cords of the high elongation (HE) type. High elongation (HE) cords have an elongation at break typically greater than 3%. Typically, they have a load-elongation diagram comprising a curvilinear portion arranged between two substantially rectilinear portions having different inclination with respect to the axes of the diagram.

In the case of use of textile cords, they can be made from synthetic fibre, for example nylon, rayon, lyocell, PEN, PET, more preferably from high-modulus synthetic fibre, in particular aramid synthetic fibre (for example fibres of Kevlar®). Alternatively, it is possible to use hybrid cords comprising at least one low-modulus wire, that is a modulus not greater than 15000 N/mm² (for example nylon, rayon or lyocell), woven with at least one high-modulus wire (for example Kevlar®), that is with a modulus not lower than 25000 N/mm².

The belt structure 6 can also comprise one or more support layers (not shown) made from elastomeric material arranged between the layer of cords and the carcass ply 3, and on which the coils are wound. Such a layer/layers can extend over a surface having an axial extension substantially corresponding to the surface on which the coils extend. In a preferred embodiment of the tyre 100 of the present invention, a layer is used comprising short aramid fibres, for example made from Kevlar®, dispersed in an elastomeric material.

In a further embodiment (not shown), in the belt structure 6 it is possible to use, in addition or as an alternative to the support layer described above, at least one layer reinforced with textile cords (totally similar to the cords that can be used in the carcass structure 2), oriented substantially radially (for example between 65° and 110°). Such a layer extends at least over the crown portion of the tyre 100, or even over a greater portion, but without turning around the bead wires 4.

A tread pattern is formed on the tread band 8. Such a pattern is defined by a plurality of grooves variously arranged along the circumferential and axial extension of the tread band 8. In one pitch of the tread pattern, such grooves define a modulus that is replicated substantially the same as itself along the circumferential direction of the tyre 100.

The grooves of the tread pattern are preferably arranged so as to define on the tread band a void to rubber ratio that is lower than or equal to about 12%.

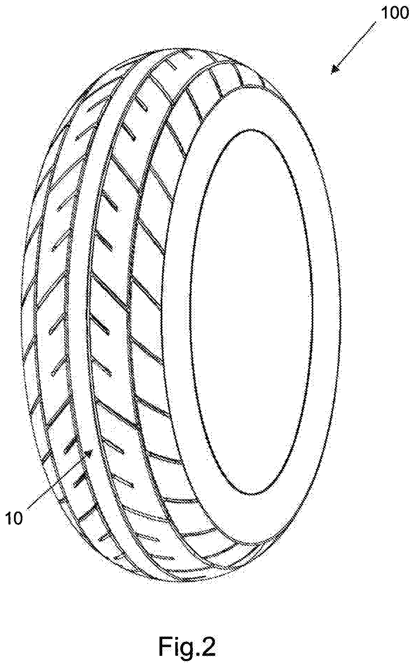

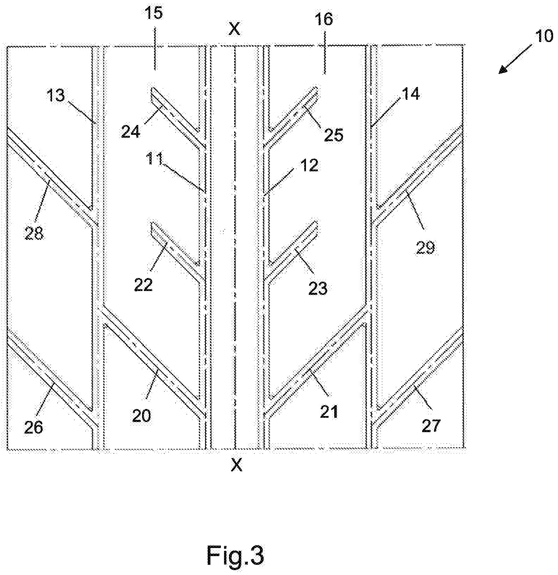

Figure 2 shows a perspective view of an embodiment of a tyre 100 according to the present invention, comprising a tread band with a tread pattern globally indicated with reference numeral 10. Figure 3 shows a pitch of the tread pattern 10 according to the embodiment shown in figure 2. The tread pattern 10 shown in figures 2 and 3 defines on the tread band of the tyre 100 a void to rubber ratio equal to about 8%.

As shown in figure 3, the tread pattern 10 comprises a pair of first substantially longitudinal grooves 11, 12 arranged on opposite sides with respect to the equatorial plane X-X of the tyre. Preferably, the first substantially longitudinal grooves 11, 12 extend along the whole circumferential extension of the tread band of the tyre. Preferably, the first substantially longitudinal grooves 11, 12 are in a portion arranged astride of the equatorial plane X-X having an extension which is lower than or equal to about 25%, more preferably about 15%, of the lateral extension of the tread band. The first substantially longitudinal grooves 11, 12 are therefore quite close to the equatorial plane X-X of the tyre.

In preferred embodiments, the first substantially longitudinal grooves 11, 12 have a width comprised between about 3 and about 6 mm. In preferred embodiments, the first substantially longitudinal grooves 11, 12 have a depth comprised between about 2 and about 7 mm.

The tread pattern 10 also comprises at least one pair of second substantially longitudinal grooves 13, 14, arranged in an axially outer position with respect to the pair of first substantially longitudinal grooves 11, 12. In other words, the second longitudinal grooves 13, 14 are arranged on the tread band in an axially outer position with respect to the first substantially longitudinal grooves 11, 12. Preferably, they are arranged in a substantially intermediate position between the equatorial plane X-X of the tyre and the lateral edges of the tread band, at a distance comprised between about 15% and about 35% of the lateral extension of the tread band with respect to the first substantially longitudinal grooves 11, 12.

Preferably, the second substantially longitudinal grooves 13, 14 extend along the whole circumferential extension of the tread band.

In preferred embodiments, the second substantially longitudinal grooves 13, 14 have a width comprised between about 3 and about 6 mm. In preferred embodiments, the first substantially longitudinal grooves 11, 12 have a depth comprised between about 2 and about 7 mm.

In the embodiment shown in figure 3, the first substantially longitudinal grooves 11, 12 and the second substantially longitudinal grooves 13, 14 extend along a substantially rectilinear direction. It is not excluded that the first and/or second substantially longitudinal grooves extend in a different manner, for example with a zig-zag configuration.

The Applicant has found that the provision of the first substantially longitudinal grooves 11, 12 makes it possible, during travel in a straight line, to obtain a shape of the footprint in which the contact pressure is distributed substantially evenly, so as to avoid triggering irregular wear and/or undesired localised temperature increases, in particular at the central area of the tread band, to the great benefit of the reduction in rolling resistance. Such an advantage is also obtained during cornering, thanks to the provision of the second substantially longitudinal grooves 13, 14. Moreover, the first and/or second substantially longitudinal grooves 11, 12, 13, 14 allow a particularly effective drainage of water to be obtained during travel in a wet ground, both in a straight line and when cornering.

Preferably, the tread pattern 10 does not comprise longitudinal grooves at the equatorial plane X-X.

As shown in figure 3, the tread pattern 10 comprises a plurality of first transversal grooves 20, 21. Such first transversal grooves 20, 21 are arranged in the portions of tread band 15, 16 located between the pairs of first and second substantially longitudinal grooves 11, 12, 13, 14.

In particular, the first transversal grooves 20, 21 extend over a substantial part of the portions of tread band 15, 16. In general, they extend over at least about 50%, more preferably about 80%, of the lateral extension of the portions of tread band 15, 16 comprised between the first and second substantially longitudinal grooves 11, 12, 13, 14. In preferred embodiments, the first transversal grooves 20, 21 are connected to the first substantially longitudinal grooves 11, 12 or to the second substantially longitudinal grooves 13, 14. In the embodiment shown in figure 3, the first transversal grooves 20, 21 are connected both to the first substantially longitudinal grooves 11, 12 and to the second substantially longitudinal grooves 13, 14.

In the embodiment shown in figure 3, the first transversal grooves 20, 21 extend along a substantially rectilinear direction. However, it is not excluded that the first transversal grooves 20, 21 extend in a different manner, for example with a curvilinear configuration, possibly even just in one portion thereof.

In the embodiment shown in figure 3, the first transversal grooves 20, 21 are arranged obliquely, so as to form a first angle with respect to a direction parallel to the equatorial plane X-X of the tyre. Preferably, such a first angle is comprised, in absolute value, between about 20° and about 70°. In the embodiment shown in figure 3, such a first angle is 45°.

The first transversal grooves 20, 21 are preferably distributed over the tread band so as to be arranged on opposite sides of the tread band itself with respect to the equatorial plane X-X of the tyre. In the embodiment shown in figure 3, the pitch of the tread pattern 10 has just one pair of first transversal grooves 20, 21, but it can be foreseen that in one pitch of the tread band 10 many transversal grooves of significant length are provided, compatibly with the need to keep the overall void to rubber ratio of the tread band low.

In preferred embodiments, the first transversal grooves 20, 21 have a width comprised between about 3 and about 6 mm. In preferred embodiments, the first transversal grooves 20, 21 have a depth comprised between about 2 and about 7 mm.

The Applicant has found that the provision, in the portions of tread band 15, 16 comprised between the first and the second substantially longitudinal grooves 11, 12, 13, 14, of the first transversal grooves 20, 21 having a significant length allows the balancing of the behaviour of the tyre during travel in a wet ground to be improved. In particular, the Applicant has found that the tyres according to the invention, whilst having a very low number of grooves and void to rubber ratio, allow to obtain a performance in a wet ground which is comparable to the one obtainable by tread patterns with a greater number of grooves.

In the embodiment shown in figure 3, the tread pattern comprises a plurality of second transversal grooves 22, 23, 24, 25. Such second transversal grooves 22, 23, 24, 25 are arranged in the portions of tread band 15, 16 located between the pairs of first and second substantially longitudinal grooves 11, 12, 13, 14. Such second transversal grooves 22, 23, 24, 25 have a length shorter than that of the first transversal grooves 20, 21. Preferably, the second transversal grooves 22, 23, 24, 25 extend at most for about 50% of the lateral extension of the portions of tread band 15, 16 comprised between the first and the second substantially longitudinal grooves 11, 12, 13, 14.

In preferred embodiments, at least some of the second transversal grooves 22, 23, 24, 25 are connected to the first substantially longitudinal grooves 11, 12 or to the second substantially longitudinal grooves 13, 14. In the embodiment shown in figure 3, the second transversal grooves 22, 23, 24, 25 are connected to the first substantially longitudinal grooves 11, 12.

In the embodiment shown in figure 3, the second transversal grooves 22, 23, 24, 25 extend along a substantially rectilinear direction. However, it is not excluded that the second transversal grooves 22, 23, 24, 25 extend in a different manner, for example with a curvilinear configuration, possibly even just in one portion thereof.

In the embodiment shown in figure 3, the second transversal grooves 22, 23, 24, 25 extend substantially parallel to the first transversal grooves 20, 21.

Moreover, in the embodiment shown in figure 3, the second transversal grooves 22, 23, 24, 25 are arranged obliquely, so as to form a second angle with respect to a direction parallel to the equatorial plane X-X of the tyre. Preferably, such a second angle is comprised, in absolute value, between about 20° and about 70°. In the embodiment shown in figure 3, such a second angle is 45°.

The second transversal grooves 22, 23, 24, 25 are preferably distributed over the tread band so as to be arranged on opposite sides of the tread band itself with respect to the equatorial plane X-X of the tyre, alternating in the circumferential direction with the first transversal grooves 20, 21. In the embodiment shown in figure 3, the pitch of the tread pattern 10 has two pairs of second transversal grooves 22, 23, 24, 25, but it can be foreseen that in one pitch of the tread pattern 10 a different number of transversal grooves of shorter length with respect to the length of the first transversal grooves 20, 21 are arranged, compatibly with the need to keep the overall void to rubber ratio of the tread band low. In preferred embodiments, the second transversal grooves 22, 23, 24, 25 have a width comprised between about 3 and about 6 mm. In preferred embodiments, the second transversal grooves 22, 23, 24, 25 have a depth comprised between about 2 and about 7 mm.

The Applicant has found that the provision, in the portions of tread band 15, 16 comprised between the first and the second substantially longitudinal grooves 11, 12, 13, 14, of the second transversal grooves 22, 23, 24, 25 having a length shorter than the first transversal grooves 20, 21 allows the behaviour of the tyre to be further improved during cornering on a wet ground, whilst not significantly increasing the overall void to rubber ratio of the tread band.

In the embodiment shown in figure 3, the tread pattern 10 comprises a plurality of third transversal grooves 26, 27, 28, 29, arranged in an axially outer position with respect to the second substantially longitudinal grooves 13, 14. In particular, the third transversal grooves 26, 27, 28, 29 are arranged in the axially outermost portion of the tread band. Preferably, the third transversal grooves 26, 27, 28, 29 extend up to the edges of the tread band.

In the embodiment shown in figure 3, the third transversal grooves 26, 27, 28, 29 extend along a substantially rectilinear direction. However, it is not excluded that the third transversal grooves 26, 27, 28, 29 extend in a different manner, for example with a curvilinear configuration, possibly even just in one portion thereof.

In the embodiment shown in figure 3, the third transversal grooves 26, 27, 28, 29 extend substantially parallel to the first transversal grooves 20, 21.

Moreover, in the embodiment shown in figure 3, the third transversal grooves 26, 27, 28, 29 are arranged obliquely, so as to form a third angle with respect to a direction parallel to the equatorial plane X-X of the tyre. Preferably, such a third angle is comprised, in absolute value, between about 20° and about 70°. In the embodiment shown in figure 3, such a third angle is 45°.

In preferred embodiments, at least some of the third transversal grooves 26, 27, 28, 29 are connected to the second substantially longitudinal grooves 13, 14. In the embodiment shown in figure 3, all of the third transversal grooves 26, 27, 28, 29 are connected to the second substantially longitudinal grooves 13, 14.

The third transversal grooves 26, 27, 28, 29 are preferably distributed over the tread band so as to be arranged in offset position along the circumferential direction with respect to the position of the first transversal grooves 20, 21. In the embodiment shown in figure 3, the pitch of the tread pattern 10 has two pairs of third transversal grooves 26, 27, 28, 29, but it can be foreseen that in one pitch of the tread pattern 10 a different number of transversal grooves arranged in the axially outermost portions of the tread band are provided, compatibly with the need to keep the overall void to rubber ratio of the tread band itself low.

In preferred embodiments, the third transversal grooves 26, 27, 28, 29 have a width comprised between about 3 and about 6 mm. In preferred embodiments, the third transversal grooves 26, 27, 28, 29 have a depth comprised between about 2 and about 7 mm.

The Applicant has found that the provision in the axially outermost portions of the tread band allows the performance of the tyre to be further improved during cornering on a wet ground, in particular in the case of cornering carried out with a high degree of lean.

### EXAMPLE

The Applicant carried out a number of tests comparing some tyres adapted to be fitted on the rear wheel of scooter motorcycles. In particular, the following tyres were compared:
a) tyres currently commercialised by the Applicant with the name Diablo™ Scooter (comparison), with a tread having a void to rubber ratio of about 12%;
b) tyres with a tread pattern comprising three longitudinal grooves arranged in the central area (one of which is arranged at the equatorial plane) and oblique transversal grooves arranged in an axially outer position with respect to the longitudinal grooves (comparison), with a tread having an overall void to rubber ratio equal to about 8%;
c) tyres with a tread pattern as shown in figures 2 and 3, with a tread having a void to rubber ratio equal to about 8%.

All of the tyres had a size 160/60 R15.

The following table shows the results obtained for tyres a), b) and c) with reference to the rolling resistance and with reference to the performance on a wet ground. The rolling resistance test was carried out by indoor testing according to the ISO 18164 standard (First edition 2005-07-01). The test relating to the performance when travelling on the wet ground was carried out by fitting the tyres on the rear wheel of a Yamaha TMAX 500 motorcycle and collecting the subjective evaluations of a test driver. The values listed in table 1 are referred to a reference value of 100 conventionally given to the tyre of type a), both in terms of measuring rolling resistance and in terms of evaluations of performance when travelling on a wet ground.

**Table 1**

| | a) (comparison) | b) (comparison) | c) (invention) |
|---|---|---|---|
| Rolling resistance | 100 | 94 | 95 |
| Grip | 100 | 92 | 96 |
| Traction/Braking | 100 | 92 | 95 |
| Drainage | 100 | 86 | 93 |
| Maintaining trajectory | 100 | 91 | 97 |
| Handling | 100 | 95 | 100 |

It can be seen that both tyres b) and c) have characteristics of lower rolling resistance with respect to reference tyre a), but the tyre of type b) is unable to achieve adequate performance in the characteristics correlated to the behaviour when travelling on a wet ground.

Tyre c) of the invention, on the other hand, maintains much better characteristics of behaviour when travelling on a wet ground, remaining very close or the same as the evaluations provided by the test driver for reference tyre a). This is surprising by virtue of the fact that reference tyre a) has a tread with a significantly higher void to rubber ratio with respect to tyre c) of the invention, and therefore reference tyre a) has a greater number of grooves capable of increasing the efficiency of evacuation of water from the footprint area.

The present invention has been described with reference to some embodiments. Various modifications can be brought to the embodiments described in detail, still remaining within the scope of protection of the invention, defined by the following claims.

## Claims

1. Tyre for motorcycles comprising a tread band on which a tread pattern (10) is formed, the tread pattern (10) comprising a plurality of grooves arranged so as to define on said tread band a void to rubber ratio lower than or equal to about 12%, wherein said tread pattern (10) comprises:
- a pair of first substantially longitudinal grooves (11, 12) arranged on opposite sides with respect to an equatorial plane (X-X) of said tyre and extending substantially along a whole circumferential extension of said tread band,
- at least one pair of second substantially longitudinal grooves (13, 14) extending substantially along the whole circumferential extension of said tread band and arranged in an axially outer position with respect to said pair of first substantially longitudinal grooves (11, 12);
- a plurality of first transversal grooves (20, 21) arranged in and extending over at least 50% of the lateral extension of portions (15, 16) of said tread band which are comprised between said first and said second substantially longitudinal grooves (11, 12, 13, 14);
- a plurality of second transversal grooves (22, 23, 24, 25), arranged in said portions (15, 16) of said tread band which are comprised between said first and said second substantially longitudinal grooves (11, 12, 13, 14), wherein said second transversal grooves (22, 23, 24, 25) have a length shorter than a length of said first transversal grooves (20, 21).

2. Tyre for motorcycles according to claim 1, wherein said first and/or said second substantially longitudinal grooves (11, 12, 13, 14) extend along a substantially rectilinear direction.

3. Tyre according to claim 1 or 2, wherein said first transversal grooves (20, 21) are arranged on at least the 80% of the lateral extension of said portions (15, 16) of said tread band which are comprised between said first and said second substantially longitudinal grooves (11, 12, 13, 14).

4. Tyre according to any of the previous claims, wherein said first transversal grooves (20, 21) are connected to said first and/or said second substantially longitudinal grooves (11, 12, 13, 14).

5. Tyre according to any of the previous claims, wherein said first transversal grooves (20, 21) extend along a substantially rectilinear direction.

6. Tyre according to any of the previous claims, wherein said first transversal grooves (20, 21) are arranged obliquely so as to form a first angle with respect to a direction parallel to said equatorial plane (X-X).

7. Tyre according to any of the previous claims, wherein said second transversal grooves (22, 23, 24, 25) extend along a substantially rectilinear direction.

8. Tyre according to any of the previous claims, wherein said second transversal grooves (22, 23, 24, 25) are arranged obliquely so as to form a second angle with respect to a direction parallel to said equatorial plane (X-X).

9. Tyre according to any of the previous claims, wherein said second transversal grooves (22, 23, 24, 25) extend substantially parallel to said first transversal grooves (20, 21).

10. Tyre according to any of the previous claims, wherein at least some of said second transversal grooves (22, 23, 24, 25) are connected to said first and/or said second substantially longitudinal grooves (11, 12, 13, 14).

11. Tyre according to any of the previous claims, wherein said tread pattern (10) comprises a plurality of third transversal grooves (26, 27, 28, 29), arranged in an axially outer position with respect to said second substantially longitudinal grooves (13, 14).

12. Tyre according to claim 11, wherein said third transversal grooves (26, 27, 28, 29) extend along a substantially rectilinear direction.

13. Tyre according to claim 11 or 12, wherein said third transversal grooves (26, 27, 28, 29) are arranged obliquely so as to form a third angle with respect to a direction parallel to said equatorial plane (X-X).

14. Tyre according to claim 13, wherein said first, second and third angles are comprised, in absolute value, between 20° and 70°.

15. Tyre according to any of claims 11 to 14, wherein said third transversal grooves (26, 27, 28, 29) extend substantially parallel to said first transversal grooves (20, 21).

16. Tyre according to any of claims 11 to 15, wherein at least some of said third transversal grooves (26, 27, 28, 29) are connected to said second substantially longitudinal grooves (13, 14).

## Patentansprüche

1. Reifen für Motorräder umfassend einen Laufflächenring, auf dem ein Laufflächenprofil (10) ausgebildet ist, wobei das Laufflächenprofil (10) eine Vielzahl von Nuten aufweist, die so angeordnet sind, dass sie auf dem Laufflächenring ein Verhältnis von negativen und positiven Profilanteilen von weniger als oder gleich etwa 12 % definieren, wobei das Laufflächenprofil (10) umfasst:
- ein Paar von ersten, im Wesentlichen längsverlaufenden Nuten (11, 12), die an in Bezug auf eine Äquatorialebene (X-X) des Reifens entgegengesetzten Seiten angeordnet sind und sich im Wesentlichen entlang einer gesamten Umfangserstreckung des Laufflächenrings erstrecken,
- zumindest ein Paar von zweiten, im Wesentlichen längsverlaufenden Nuten (13, 14), die sich im Wesentlichen entlang der gesamten Umfangserstreckung des Laufflächenrings erstrecken und in einer axial äußeren Position in Bezug auf das Paar von ersten, im Wesentlichen längsverlaufenden Nuten (11, 12) angeordnet sind;
- eine Vielzahl von ersten querverlaufenden Nuten (20, 21), angeordnet in und sich über zumindest 50 % der seitlichen Erstreckung der Abschnitte (15, 16) des Laufflächenrings erstreckend, die zwischen den ersten und zweiten im Wesentlichen längsverlaufenden Nuten (11, 12, 13, 14) liegen;
- eine Vielzahl von zweiten querverlaufenden Nuten (22, 23, 24, 25), angeordnet in den Abschnitten (15, 16) des Laufflächenrings, die zwischen den ersten und zweiten im Wesentlichen längsverlaufenden Nuten (11, 12, 13, 14) liegen, wobei die zweiten querverlaufenden Nuten (22, 23, 24, 25) eine Länge aufweisen, die kürzer als eine Länge der ersten querverlaufenden Nuten (20, 21) ist.

2. Reifen für Motorräder nach Anspruch 1, wobei die ersten und zweiten im Wesentlichen längsverlaufenden Nuten (11, 12, 13, 14) sich entlang einer im Wesentlichen geradlinigen Richtung erstrecken.

3. Reifen nach Anspruch 1 oder 2, wobei die ersten querverlaufenden Nuten (20, 21) an zumindest jenen 80 % der seitlichen Erstreckung der Abschnitte (15 16) des Laufflächenrings angeordnet sind, die zwischen den ersten und zweiten im Wesentlichen längsverlaufenden Nuten (11, 12, 13, 14) liegen.

4. Reifen nach einem der vorhergehenden Ansprüche, wobei die ersten querverlaufenden Nuten (20, 21) mit den ersten und/oder zweiten im Wesentlichen längsverlaufenden Nuten (11, 12, 13, 14) verbunden sind.

5. Reifen nach einem der vorhergehenden Ansprüche, wobei die ersten querverlaufenden Nuten (20, 21) sich entlang einer im Wesentlichen geradlinigen Richtung erstrecken.

6. Reifen nach einem der vorhergehenden Ansprüche, wobei die ersten querverlaufenden Nuten (20, 21) schräg angeordnet sind, so dass sie einen ersten Winkel in Bezug auf eine Richtung parallel zu der Äquatorialebene (X-X) bilden.

7. Reifen nach einem der vorhergehenden Ansprüche, wobei die zweiten querverlaufenden Nuten (22, 23, 24, 25) sich entlang einer im Wesentlichen geradlinigen Richtung erstrecken.

8. Reifen nach einem der vorhergehenden Ansprüche, wobei die zweiten querverlaufenden Nuten (22, 23, 24, 25) schräg angeordnet sind, so dass sie einen zweiten Winkel in Bezug auf eine Richtung parallel zu der Äquatorialebene (X-X) bilden.

9. Reifen nach einem der vorhergehenden Ansprüche, wobei die zweiten querverlaufenden Nuten (22, 23, 24, 25) sich im Wesentlichen parallel zu den ersten querverlaufenden Nuten (20, 21) erstrecken.

10. Reifen nach einem der vorhergehenden Ansprüche, wobei zumindest ein Teil der zweiten querverlaufenden Nuten (22, 23, 24, 25) mit den ersten und/oder zweiten im Wesentlichen längsverlaufenden Nuten (11, 12, 13, 14) verbunden ist.

11. Reifen nach einem der vorhergehenden Ansprüche, wobei das Laufflächenprofil (10) eine Vielzahl von dritten querverlaufenden Nuten (26, 27, 28, 29) umfasst, die in einer axial äußeren Position in Bezug auf die zweiten im Wesentlichen längsverlaufenden Nuten (13, 14) angeordnet sind.

12. Reifen nach Anspruch 11, wobei die dritten querverlaufenden Nuten (26, 27, 28 29) sich entlang einer im Wesentlichen geradlinigen Richtung erstrecken.

13. Reifen nach Anspruch 11 oder 12, wobei die dritten querverlaufenden Nuten (26, 27, 28, 29) schräg angeordnet sind, so dass sie einen dritten Winkel in Bezug auf eine Richtung parallel zu der Äquatorialebene (X-X) bilden.

14. Reifen nach Anspruch 13, wobei die ersten, zweiten und dritten Winkel in absoluten Werten zwischen 20° und 70° liegen.

15. Reifen nach einem der Ansprüche 11 bis 14, wobei die dritten querverlaufenden Nuten (26, 27, 28, 29) sich im Wesentlichen parallel zu den ersten querverlaufenden Nuten (20, 21) erstrecken.

16. Reifen nach einem der Ansprüche 11 bis 15, wobei zumindest einige der dritten querverlaufenden Nuten (26, 27, 28, 29) mit den zweiten im Wesentlichen längsverlaufenden Nuten (13, 14) verbunden sind.

## Revendications

1. Pneu pour motocycles comprenant une bande de roulement sur laquelle une sculpture de bande de roulement (10) est formée, la sculpture de bande de roulement (10) comprenant une pluralité de rainures agencées de manière à définir sur ladite bande de roulement un rapport vide sur caoutchouc inférieur ou égal à environ 12%, dans lequel ladite sculpture de bande de roulement (10) comprend :
- une paire de premières rainures sensiblement longitudinales (11, 12) agencées sur des côtés opposés par rapport à un plan équatorial (X-X) dudit pneu et s'étendant sensiblement le long d'une extension circonférentielle entière de ladite bande de roulement,
- au moins une paire de deuxièmes rainures sensiblement longitudinales (13, 14) s'étendant sensiblement le long de l'extension circonférentielle entière de ladite bande de roulement et agencées dans une position axialement extérieure par rapport à ladite paire de premières rainures sensiblement longitudinales (11, 12) ;
- une pluralité de premières rainures transversales (20, 21) agencées sur au moins 50% d'une extension latérale de parties (15, 16) de ladite bande de roulement qui sont comprises entre lesdites premières et lesdites deuxièmes rainures sensiblement longitudinales (11, 12, 13, 14) ;
- une pluralité de deuxièmes rainures transversales (22, 23, 24, 25), agencées dans lesdites parties (15, 16) de ladite bande de roulement, qui sont comprises entre lesdites premières et lesdites deuxièmes rainures sensiblement longitudinales (11, 12, 13, 14), où lesdites deuxièmes rainures transversales (22, 23, 24, 25) ont une longueur plus courte qu'une longueur desdites premières rainures transversales (20, 21).

2. Pneu pour motocycles selon la revendication 1, dans lequel lesdites premières et/ou lesdites deuxièmes rainures sensiblement longitudinales (11, 12, 13, 14) s'étendent le long d'une direction sensiblement rectiligne.

3. Pneu selon la revendication 1 ou 2, dans lequel lesdites premières rainures transversales (20, 21) sont agencées sur au moins 80% de l'extension latérale desdites parties (15, 16) de ladite bande de roulement qui sont comprises entre lesdites premières et lesdites deuxièmes rainures sensiblement longitudinales (11, 12, 13, 14).

4. Pneu selon l'une des revendications précédentes, dans lequel lesdites premières rainures transversales (20, 21) sont reliées auxdites premières et/ou auxdites deuxièmes rainures sensiblement longitudinales (11, 12, 13, 14) .

5. Pneu selon l'une des revendications précédentes, dans lequel lesdites premières rainures transversales (20, 21) s'étendent le long d'une direction sensiblement rectiligne.

6. Pneu selon l'une des revendications précédentes, dans lequel lesdites premières rainures transversales (20, 21) sont agencées obliquement de manière à former un premier angle par rapport à une direction parallèle audit plan équatorial (X-X).

7. Pneu selon l'une des revendications précédentes, dans lequel lesdites deuxièmes rainures transversales (22, 23, 24, 25) s'étendent le long d'une direction sensiblement rectiligne.

8. Pneu selon l'une des revendications précédentes, dans lequel lesdites deuxièmes rainures transversales (22, 23, 24, 25) sont agencées obliquement de manière à former un deuxième angle par rapport à une direction parallèle audit plan équatorial (X-X).

9. Pneu selon l'une des revendications précédentes, dans lequel lesdites deuxièmes rainures transversales (22, 23, 24, 25) s'étendent sensiblement parallèlement auxdites premières rainures transversales (20, 21).

10. Pneu selon l'une des revendications précédentes, dans lequel au moins certaines desdites deuxièmes rainures transversales (22, 23, 24, 25) sont reliées auxdites premières et/ou audites deuxièmes rainures sensiblement longitudinales (11, 12, 13, 14).

11. Pneu selon l'une des revendications précédentes, dans lequel ladite sculpture de bande de roulement (10) comprend une pluralité de troisièmes rainures transversales (26, 27, 28, 29), agencées dans une position axialement extérieure par rapport auxdites deuxièmes rainures sensiblement longitudinales (13, 14).

12. Pneu selon la revendication 11, dans lequel lesdites troisièmes rainures transversales (26, 27, 28, 29) s'étendent le long d'une direction sensiblement rectiligne.

13. Pneu selon la revendication 11 ou 12, dans lequel lesdites troisièmes rainures transversales (26, 27, 28, 29) sont agencées obliquement de manière à former un troisième angle par rapport à une direction parallèle audit plan équatorial (X-X).

14. Pneu selon la revendication 13, dans lequel lesdits premier, deuxième et troisième angles sont compris, en valeur absolue, entre 20° et 70°.

15. Pneu selon l'une des revendications 11 à 14, dans lequel lesdites troisièmes rainures transversales (26, 27, 28, 29) s'étendent sensiblement parallèlement auxdites premières rainures transversales (20, 21).

16. Pneu selon l'une des revendications 11 à 15, dans lequel au moins certaines desdites troisièmes rainures transversales (26, 27, 28, 29) sont reliées auxdites deuxièmes rainures sensiblement longitudinales (13, 14).
